# EUROPÄISCHE PATENTSCHRIFT

(11) **EP 2 072 329 B1**
(45) Veröffentlichungstag und Bekanntmachung des Hinweises auf die Patenterteilung: **22.09.2010**
(21) Anmeldenummer: 08019808.8
(22) Anmeldetag: 13.11.2008
(51) Int. Cl.: B60N 3/10

(54) **Ablagefach**
Storage compartment
Compartiment de rangement

(30) Priorität: 20.12.2007 DE 102007061898
(43) Veröffentlichungstag der Anmeldung: 24.06.2009
(73) Patentinhaber: fischer automotive systems GmbH & Co. KG, 72160 Horb (DE)
(72) Erfinder: Kreutmayr, Peter, 72072 Tübingen (DE)

(56) Entgegenhaltungen:
- DE-A1- 10 102 559
- US-A1- 2008 029 672
- US-A1- 2008 054 006

## Beschreibung

Die Erfindung betrifft ein Ablagefach mit den Merkmalen des Anspruchs 1.

Die Ablagefächer sind zur Aufbewahrung von Gegenständen wie beispielsweise einer Brille, Stiften, Notizblöcken und Kleinteilen in Kraftwagen bekannt. Sie sind auch in anderen Land-, Luft- und Seefahrzeugen verwendbar. Die bekannten Ablagefächer sind als oben offene Schalen ausgebildet, die beispielsweise in eine Mittelkonsole auf einem Kardantunnel eines Kraftwagen einbaubar sind. Raumrichtungsangaben wie "oben" beziehen sich auf eine vorgesehene Einbau- und Gebrauchslage des Ablagefachs. Gelegentlich ist es wünschenswert, das Ablagefach zu verkleinern oder zu unterteilen. Hierfür sind u.a. schwenkbare Fachteiler bekannt, die in das Ablagefach hinein und aus ihm heraus schwenkbar sind, wobei die Fachteiler in der aus dem Ablagefach heraus geschwenkten Stellung beispielsweise innen an einer Umfangswand des Ablagefachs anliegen oder in einer Vertiefung oder Aussparung der Umfangswand des Ablagefachs einliegen.

Aus der EP 1 304 257 A2 ist ein in Draufsicht ovales Ablagefach mit einem um eine vertikale Schwenkachse schwenkbaren Fachteiler bekannt. Der Fachteiler hat die Form einer gekrümmten Platte, wobei die Krümmung des Fachteilers mit einer Krümmung einer Umfangswand des Ablagefachs übereinstimmt. Der Fachteiler lässt sich in das Ablagefach hineinschwenken, so dass er einen Teil an einem Ende des Ablagefachs abtrennt, in den beispielsweise ein Getränkebehälter wie eine Getränkedose einstellbar ist. In umgekehrter Richtung lässt sich der Fachteiler aus dem Ablagefach herausschwenken in eine Aussparung der Umfangswand des Ablagefachs, so dass der Fachteiler bündig mit der Umfangswand des Ablagefachs ist. Eine Rasteinrichtung mit einer Verzahnung hält den Fachteiler in seiner jeweiligen Schwenkstellung. Durch Niederdrücken des Fachteilers gegen die Kraft eines Federelements lässt sich die Rasteinrichtung außer Eingriff bringen, so dass der Fachteiler in beschriebener Weise schwenkbar ist.

Dokument DE 10102559 beschreibt ein Ablagefach mit einem Aufnahmeraum, der oberseitig durch eine Einstecköffnung und gegenüberliegend durch einen Boden begrenzt ist.

Aufgabe der Erfindung ist, ein Ablagefach mit einem Fachteiler der vorstehend erläuterten Art mit einer geänderten Feststelleinrichtung für den Fachteiler vorzuschlagen.

Diese Aufgabe wird erfindungsgemäß durch die Merkmale des Anspruchs 1 gelöst. Das erfindungsgemäße Ablagefach weist einen Fachteiler und eine Stütze auf, die wie der Fachteiler eine Schwenklagerung aufweist, mit der sie in das Ablagefach hinein und aus dem Ablagefach heraus schwenkbar gelagert ist. Dabei ist mit dem Begriff "heraus" nicht zwingend eine Position außerhalb des Ablagefachs gemeint, sondern es ist grundsätzlich eine zweite Position gemeint, die auch innerhalb des Ablagefachs liegen kann. Die Schwenkachsen der Schwenklagerung des Fachteilers und der Schwenklagerung der Stütze weisen einen Abstand voneinander auf, so dass sich der Fachteiler und die Stütze relativ zueinander bewegen, wenn sie in das Ablagefach hinein und aus dem Ablagefach heraus geschwenkt werden. Des Weiteren weist das erfindungsgemäße Ablagefach eine Rücklaufsperre für die Stütze auf, die ein Schwenken oder allgemein eine Bewegung der Stütze in der einen Richtung zulässt und gegen eine Rückbewegung sperrt. Die Rücklaufsperre kann, wie von Handbremshebeln von Kraftwagen bekannt, sägezahnförmige Rasten aufweisen, mit denen eine Sperrklinke oder dgl. zusammenwirkt. Auch andere, form- oder kraftschlüssige Rücklaufsperren sind möglich. Es ist vorgesehen, dass die Rücklaufsperre gegen eine Bewegung der Stütze aus dem Ablagefach heraus sperrt, grundsätzlich ist allerdings auch die entgegengesetzte Sperrrichtung möglich. Die Stütze schwenkt mit dem Fachteiler in das Ablagefach hinein und stützt den Fachteiler aufgrund der Rücklaufsperre gegen eine Rückbewegung, also gegen Schwenken des Fachteilers aus dem Ablagefach heraus. Auf diese Weise lässt sich ein Bereich vom Ablagefach abtrennen, wobei die Größe des abgetrennten Bereichs vorzugsweise stufenlos oder in Stufen einstellbar ist. Um den Fachteiler aus dem Ablagefach heraus zu schwenken, muss die Rücklaufsperre entsperrt werden.

Die Rücklaufsperre kann ortsfest am Ablagefach, insbesondere an einer Umfangswand des Ablagefachs angeordnet sein, so dass sich beim Schwenken des Fachteilers die Stütze entlang der Rücklaufsperre verschiebt. Eine Ausgestaltung der Erfindung sieht vor, die Rücklaufsperre zwischen dem Fachteiler und der Stütze anzuordnen. Zwischen ist wirkungsmäßig gemeint, es sind beispielsweise die Rasten am Fachteiler angeordnet oder ausgebildet und ein Ende der Stütze ist als mit den Rasten zusammenwirkende Klinke ausgebildet oder weist eine Klinke auf.

Eine Ausgestaltung der Erfindung sieht vor, dass der Fachteiler federbeaufschlagt nach außen ist. Zum Abtrennen eines Teils des Ablagefachs wird der Fachteiler gegen seine Federbeaufschlagung in das Ablagefach hinein geschwenkt. Die Rücklaufsperre sperrt gegen ein Zurückschwenken des federbeaufschlagten Fachteilers nach außen. Erst nach Entsperren der Rücklaufsperre schwenkt der Fachteiler nach außen.

Eine weitere oder andere Ausgestaltung der Erfindung sieht vor, dass der Fachteiler federbeaufschlagt gegen die Stütze oder umgekehrt die Stütze federbeaufschlagt gegen den Fachteiler ist. Dadurch wird die Rücklaufsperre in Eingriff gebracht bzw. gehalten, jedenfalls wenn sie am Fachteiler und der Stütze angeordnet ist.

Eine Ausgestaltung der Erfindung sieht vor, dass die Schwenklagerungen des Fachteilers und der Stütze an deren einander nahen Enden angeordnet sind, wobei die Schwenkachsen der Schwenklagerungen Abstand voneinander aufweisen. Dadurch schwenken der Fachteiler und die Stütze näherungsweise parallel zueinander und sind mit wenig Bauraum unterbringbar. Beim Schwenken verschieben sich der Fachteiler und die Stütze gegeneinander, so dass die Rücklaufsperre wirksam ist und ein Schwenken nur in einer Richtung, vorzugsweise in das Ablagefach hinein, zulässt und gegen ein Herausschwenken sperrt.

Eine Ausgestaltung der Erfindung sieht vor, dass der Fachteiler und die Stütze plattenförmig und aneinander oder ineinander angeordnet sind. Der Fachteiler und die Stütze weisen insbesondere die Form der Umfangswand des Ablagefachs in dem Bereich, in dem sie angeordnet sind, auf.

Eine Ausgestaltung der Erfindung sieht vor, dass das Ablagefach einen Halter für einen Getränkebehälter wie eine Dose, einen Becher oder eine Flasche aufweist. Solche Halter werden auch als "Cupholder" bezeichnet. Es kann das Ablagefach selbst der Halter sein oder es ist mit dem Fachteiler ein Bereich vom Ablagefach abtrennbar, der eine oben offene Behälteraufnahme bildet, in die ein Getränkebehälter einstellbar ist und der den Halter für den Getränkebehälter bildet. Bei Nichtgebrauch als Halter für einen Getränkebehälter wird der Fachteiler nach außen geschwenkt, so dass das Ablagefach insgesamt zur Verfügung steht. Durch Schwenken des Fachteilers lässt sich die lichte Weite einer Behälteraufnahme des Halters einstellen, die zum Einstellen eines Getränkebehälters dient. Der Fachteiler bildet in diesem Fall ein Durchmesserausgleichselement, durch das das Ablagefach bzw. der Halter an Getränkebehälter unterschiedlichen Durchmessers anpassbar ist.

Die Erfindung wird nachfolgend anhand eines in der Zeichnung dargestellten Ausführungsbeispiels näher erläutert. Es zeigen:
- Figur 1: einen Halter für einen Getränkebehälter als Ablagefach gemäß der Erfindung in perspektivischer Darstellung schräg von oben;
- Figur 2: den Halter aus Figur 1 mit nach innen geschwenktem Fachteiler;
- Figur 3: eine Ansicht des Halters aus Figur 1 mit Blickrichtung radial von außen, teilweise aufgebrochen; und
- Figur 4: den Halter aus Figur 1 in einer Querschnittsdarstellung mit axialer Blickrichtung.

Der in der Zeichnung dargestellte Halter 1 ist zum Einbau in einen nicht dargestellten Kraftwagen vorgesehen und dient zum kippsicheren Halten eines Getränkebehälters wie beispielsweise einer Getränkedose, eines Bechers oder einer Flasche. Solche Halter 1 werden auch als "Cupholder" bezeichnet. Der Halter 1 bildet ein Ablagefach gemäß der Erfindung.

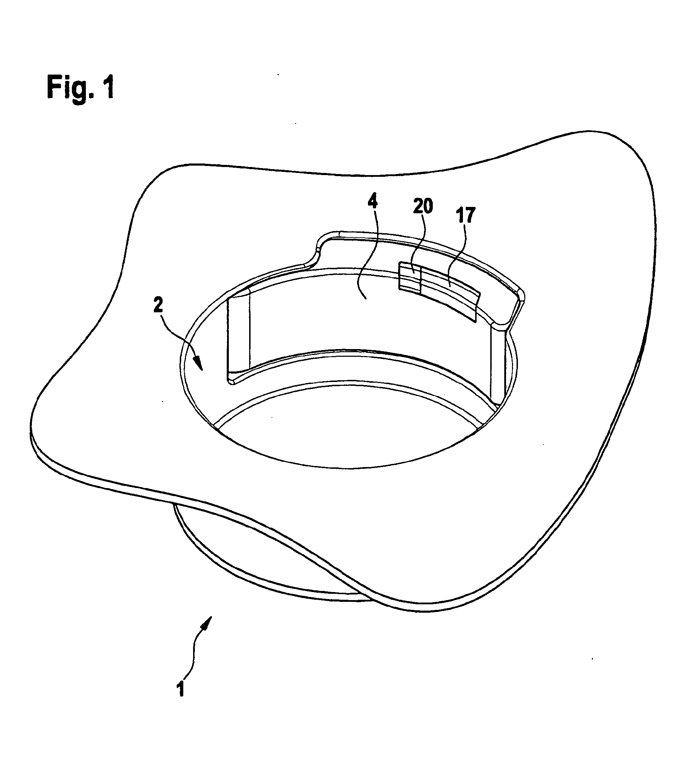

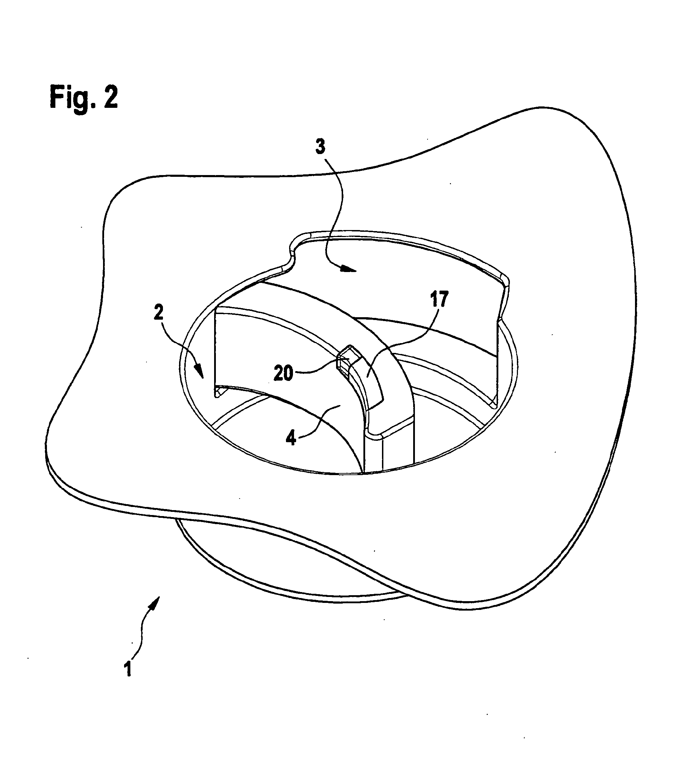

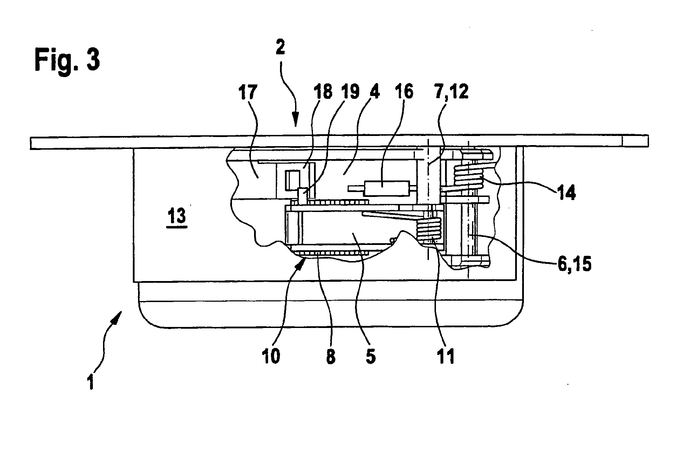

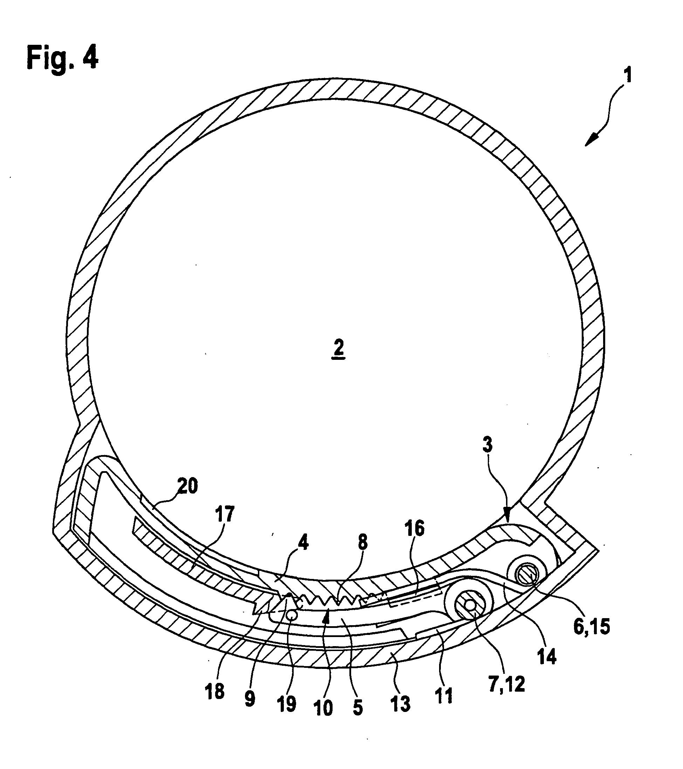

Der Halter 1 weist eine napfförmige Vertiefung auf, die eine Behälteraufnahme 2 zum Einstellen eines nicht dargestellten Getränkebehälters bildet. In einer Umfangswand weist die Behälteraufnahme 2 eine Ausnehmung 3 auf, die sich über mehr als einen Viertelkreisbogen in Umfangsrichtung und über etwa 3/4 einer Höhe der Behälteraufnahme 2 erstreckt. In der Ausnehmung 3 sind ein plattenförmiger Fachteiler 4 und eine Stütze 5 angeordnet (für die Stütze 5 siehe Figuren 3 und 4). Der Fachteiler 4 weist dieselbe Krümmung wie die Umfangswand der Behälteraufnahme 2 auf und ist mit der Umfangswand bündig, wenn er nach außen geschwenkt ist, wie es in Figuren 1 und 4 zu sehen ist. Er lässt sich, wie in Figur 2 zu sehen, in die Behälteraufnahme 2 des Halters 1 hineinschwenken. Die Stütze 5 ist auf einer Außenseite des Fachteilers 4 angeordnet und erstreckt sich ebenfalls kreisbogenförmig in der Umfangsrichtung. Im Ausführungsbeispiel ist die Stütze 5 nur etwa halb so lang wie der Fachteiler 4, das ist allerdings nicht zwingend für die Erfindung.

Der Fachteiler 4 und die Stütze 5 weisen jeweils eine Schwenklagerung 6, 7 auf (Figuren 3 und 4), deren Schwenkachsen parallel zueinander und achsparallel zur Behälteraufnahme 2 verlaufen. Die Schwenklagerungen 6, 7 sind auf Außenseiten des Fachteilers 4 und der Stütze 5 angeordnet, ihre Schwenkachsen sind in Umfangsrichtung der Behälteraufnahme 2 voneinander beabstandet.

Der Fachteiler 4 weist eine Verzahnung 8 nach Art einer Zahnstange auf, die sich kreisförmig gekrümmt in Umfangsrichtung erstreckt. Die Verzahnung 8 ist auf einer der Stütze 5 zugewandeten Außenseite des Fachteilers 4 angeordnet und wirkt mit einer Sperrklinke 9 der Stütze 5 zusammen. Die Sperrklinke 9 hat die Form eines mit der Verzahnung 8 korrespondierenden Zahns und befindet sich an einem der Schwenklagerung 7 der Stütze 5 fernen Ende der Stütze 5 auf einer dem Fachteiler 4 und dessen Verzahnung 8 zugewandter Innenseite der Stütze 5. Die Schwenklagerungen 6, 7 sind an einander nahen Enden des Fachteilers 4 und der Stütze 5 vorgesehen. Die Sperrklinke 9 und die Verzahnung 8 bilden eine Rücklaufsperre 10, die noch zu erläutern sein wird.

Ein Federelement 11 beaufschlagt die Stütze 5 gegen den Fachteiler 4 und hält bzw. bringt die Sperrklinke 9 in Eingriff mit der Verzahnung 8. Im Ausführungsbeispiel ist das Federelement 11 eine Schraubenschenkelfeder, deren Wicklung auf einer Welle 12 der Schwenklagerung 7 der Stütze 5 angeordnet ist. Ein Schenkel des als Schraubenschenkelfeder ausgebildeten Federelements 11 liegt auf einer Innenseite einer Wandung 13 an, die die Ausnehmung 3, in der der Fachteiler 4 und die Stütze 5 angeordnet sind, auf einer Außenseite umschließt. Der andere Schenkel des Federelements 11 liegt von außen auf der Stütze 5 an. Das als Torsionsfeder wirkende Federelement 11 beaufschlagt die Stütze 5 in die Behälteraufnahme 2 hinein, also gegen den Fachteiler 4.

Ein weiteres Federelement 14 beaufschlagt den Fachteiler 4 nach außen aus der Behälteraufnahme 2 heraus. Auch dieses Federelement 14 ist im Ausführungsbeispiel als Schraubenschenkelfeder ausgeführt, das mit seinen Wicklungen auf einer Welle 15 der Schwenklagerung 6 des Fachteilers 4 aufgenommen ist. Ein Schenkel des Federelements 14 liegt auf einer Innenseite der Wandung 13 an, die die Ausnehmung 3 umschließt. Der andere Schenkel des Federelements 14 ist in einem im Querschnitt L-förmigen Halter 16 auf der Außenseite des Fachteilers 4 aufgenommen, so dass das Federelement 14 den Fachteiler 4 nach außen beaufschlagen kann.

Zur Verkleinerung einer lichten Weite der Behälteraufnahme 2 wird der Fachteiler 4 gegen die Kraft seines Federelements 14 nach innen in die Behälteraufnahme 2 hinein verschwenkt. Das Federelement 11 der Stütze 5 beaufschlagt die Stütze 5 wie beschrieben nach innen, d. h. gegen die Außenseite des Fachteilers 4, so dass die Stütze 5 mit dem Fachteiler 4 nach innen schwenkt. Da die Schwenkachsen der Schwenklagerungen 6, 7 des Fachteilers 4 und der Stütze 5 einen Abstand voneinander aufweisen, verschieben sich der Fachteiler 4 und die Stütze 5 beim Schwenken gegeneinander. Dadurch gelangt die Sperrklinke 9 am Ende der Stütze 5 außer Eingriff von der Verzahnung 8 und springt um jeweils einen Zahn der Verzahnung 8 weiter. Wird der Fachteiler 4 losgelassen, gelangt die Sperrklinke 9 in Eingriff mit der Verzahnung 8 des Fachteilers 4, so dass die Stütze 5 über die Verzahnung 8 und die Sperrklinke 9 den Fachteiler 4 gegen eine Rückbewegung, also ein Schwenken nach außen, sperrt. Wie bereits gesagt, bilden die Verzahnung 8 und die Sperrklinke 9 eine Rücklaufsperre 10. Der Fachteiler 4 lässt sich wie beschrieben Zahn um Zahn der Verzahnung 8, also schrittweise, in die Behälteraufnahme 2 hinein verschwenken. Dadurch lässt sich die lichte Weite der Behälteraufnahme 2, also ein Abstand zwischen dem Fachteiler 4 und einem gegenüberliegenden Bereich der Umfangswand der Behälteraufnahme 2, einstellen und an einen Durchmesser eines einzustellenden oder eingestellten, nicht dargestellten Getränkebehälters anpassen.

Zum Entsperren weist die Rücklaufsperre 10 einen Schieber 17 auf, der wie der Fachteiler 4 kreisbogenförmig gekrümmt ist und in Umfangsrichtung auf der Außenseite des Fachteilers 4 verschiebbar geführt ist. Der Schieber 17 weist einen Keil 18 an seinem einen Ende auf, der einen nach oben abstehenden, zapfenförmigen Ausheber 19 der Stütze 5 untergreift. Wird der Keil 18 mit dem Schieber 17 verschoben, drückt der Keil 18 die Stütze 5 über den Ausheber 19 nach außen vom Fachteiler 5 ab. Dadurch gelangt die Sperrklinke 9 außer Eingriff von der Verzahnung 8 und das Federelement 14 schwenkt den Fachteiler 4 nach außen aus der Behälteraufnahme 2 heraus in die in Figuren 1, 3 und 4 dargestellte Stellung, in der der Fachteiler 4 mit der Umfangswand der Behälteraufnahme 2 bündig in der Ausnehmung 3 einliegt. Die Stütze 5 wird mit dem Fachteiler 4 nach außen geschwenkt. Anschließend wird der Schieber 17 zurückverschoben, so dass sich der Keil 18 so weit zwischen dem Ausheber 19 und dem Fachteiler 4 heraus bewegt, dass das Federelement 11 die Stütze 5 wieder von außen gegen den Fachteiler 4 schwenkt und damit die Sperrklinke 9 in Eingriff mit der Verzahnung 8 bringt. Der Schieber 17 ist durch eine Öffnung 20 zugänglich, die sich an einer oberen Innenkante des Fachteilers 4 ein Stück weit in Umfangsrichtung erstreckt (Figuren 1, 2). Figur 2 zeigt die am weitesten in die Behälteraufnahme 2 hinein verschwenkte Endstellung des Fachteilers 4. Der Fachteiler 4 bildet ein Durchmesserausgleichselement.

### Bezugszeichenliste

### Ablagefach

- 1: Halter
- 2: Behälteraufnahme
- 3: Ausnehmung
- 4: Fachteiler
- 5: Stütze
- 6, 7: Schwenklagerung
- 8: Verzahnung
- 9: Sperrklinke
- 10: Rücklaufsperre
- 11: Federelement
- 12: Welle
- 13: Wandung
- 14: Federelement
- 15: Welle
- 16: Halter
- 17: Schieber
- 18: Keil
- 19: Ausheber
- 20: Öffnung

## Patentansprüche

1. Ablagefach (1) mit einem Fachteiler (4), der mit einer Schwenklagerung (6) in das Ablagefach (1) hinein und aus dem Ablagefach (1) heraus schwenkbar gelagert ist, **dadurch gekennzeichnet, dass** das Ablagefach (1) eine Stütze (5) aufweist, die mit einer Schwenklagerung (7) in das Ablagefach (1) hinein und aus dem Ablagefach (1) heraus schwenkbar gelagert ist, dass die Schwenkachsen der beiden Schwenklagerungen (6, 7) Abstand voneinander aufweisen und dass die Stütze (5) eine Rücklaufsperre (10) aufweist, die ein Schwenken in einer Richtung zulässt und gegen eine Rückbewegung sperrt.

2. Ablagefach nach Anspruch 1, **dadurch gekennzeichnet, dass** die Rücklaufsperre (10) am Fachteiler (4) und der Stütze (5) angeordnet ist.

3. Ablagefach nach Anspruch 1, **dadurch gekennzeichnet, dass** der Fachteiler (4) federbeaufschlagt nach außen und/oder der Fachteiler (4) und die Stütze (5) federbeaufschlagt gegeneinander sind.

4. Ablagefach nach Anspruch 1, **dadurch gekennzeichnet, dass** die Schwenklagerungen (6, 7) an einander nahen Enden des Fachteilers (4) und der Stütze (5) angeordnet sind.

5. Ablagefach nach Anspruch 1, **dadurch gekennzeichnet, dass** der Fachteiler (4) und die Stütze (5) plattenförmig und aneinander oder ineinander liegend sind.

6. Ablagefach nach Anspruch 1, **dadurch gekennzeichnet, dass** das Ablagefach (1) ein Halter für einen Getränkebehälter ist, und dass mit dem Fachteiler (4) eine lichte Weite einer Behälteraufnahme (2) einstellbar ist.

## Claims

1. Storage compartment (1) having a compartment divider (4) which, by means of a pivotal mounting (6), is mounted so that it can be pivoted into the storage compartment (1) and out from the storage compartment (1), **characterised in that** the storage compartment (1) has a support (5) which, by means of a pivotal mounting (7), is mounted so that it can be pivoted into the storage compartment (1) and out from the storage compartment (1); **in that** the pivot axes of the two pivotal mountings (6, 7) are spaced apart from one another; and **in that** the support (5) has a return blocker (10) which allows pivoting in one direction and blocks backward movement.

2. Storage compartment according to claim 1, **characterised in that** the return blocker (10) is arranged at the compartment divider (4) and the support (5).

3. Storage compartment according to claim 1, **characterised in that** the compartment divider (4) is resiliently biased towards the outside and/or the compartment divider (4) and the support (5) are resiliently biased against one another.

4. Storage compartment according to claim 1, **characterised in that** the pivotal mountings (6, 7) are arranged at ends, close to one another, of the compartment divider (4) and of the support (5).

5. Storage compartment according to claim 1, **characterised in that** the compartment divider (4) and the support (5) are of plate form and are located against one another or in one another.

6. Storage compartment according to claim 1, **characterised in that** the storage compartment (1) is a holder for a drinks container; and **in that** the clear width of a container receptacle (2) is adjustable using the compartment divider (4).

## Revendications

1. Compartiment de rangement (1) muni d'un séparateur (4) agencé, au moyen d'un système (6) de montage pivotant, de manière à pouvoir pénétrer dans le compartiment de rangement (1) en accomplissant un pivotement, et à pouvoir sortir dudit compartiment de rangement (1) en effectuant un pivotement, **caractérisé par le fait que** ledit compartiment de rangement (1) présente un élément d'appui (5) agencé, à l'aide d'un système (7) de montage pivotant, pour pouvoir pénétrer dans le compartiment de rangement (1) en effectuant un pivotement, et sortir dudit compartiment de rangement (1) en accomplissant un pivotement ; **par le fait que** les axes de pivotement des deux systèmes (6, 7) de montage pivotant sont mutuellement distants ; et **par le fait que** l'élément d'appui (5) comporte un verrou antirecul (10) autorisant un pivotement dans une direction, et interdisant un mouvement rétrograde.

2. Compartiment de rangement selon la revendication 1, **caractérisé par le fait que** le verrou antirecul (10) est installé sur le séparateur (4) dudit compartiment, et sur l'élément d'appui (5).

3. Compartiment de rangement selon la revendication 1, **caractérisé par le fait que** le séparateur (4) dudit compartiment est sollicité élastiquement vers l'extérieur, et/ou ledit séparateur (4) et l'élément d'appui (5) sont sollicités élastiquement l'un vers l'autre.

4. Compartiment de rangement selon la revendication 1, **caractérisé par le fait que** les systèmes (6, 7) de montage pivotant se trouvent à des extrémités du séparateur (4) dudit compartiment, et de l'élément d'appui (5), qui sont situées à proximité réciproque.

5. Compartiment de rangement selon la revendication 1, **caractérisé par le fait que** le séparateur (4) dudit compartiment, et l'élément d'appui (5), sont de configurations aplaties et sont en applique l'un sur l'autre, ou imbriqués l'un dans l'autre.

6. Compartiment de rangement selon la revendication 1, **caractérisé par le fait que** ledit compartiment de rangement (1) est un support destiné à un conteneur de boissons ; et **par le fait que** le séparateur (4) dudit compartiment autorise un ajustement de la largeur intérieure d'un logement (2) de conteneur.
